# EUROPEAN PATENT APPLICATION

(11) **EP 1 387 145 A1**
(43) Date of publication of application: **04.02.2004**
(21) Application number: 02017396.9
(22) Date of filing: 02.08.2002
(51) Int. Cl.: G01C 21/34

(54) **Differential dynamic navigation system for off-board car navigation**

(71) Applicant: ComRoad AG, 85716 Unterschleissheim (DE)
(72) Inventor: Durekovic, Sinisa, 85356 Freising (DE)
(74) Representative: Ganahl, Bernhard

(57) **Abstract**

An off-board navigation system for providing navigation and route information including real-time information comprising at least one client and a server, said at least one client being connected to said server via a wireless connection. The off-board navigation system comprises a static map database for storing road map data and a traffic information database for storing traffic information data, wherein said databases are connected via a telecommunication or computer network to said server for providing said client with navigation and road map information, characterized by a dynamic map database for storing time varying attributes of said road map data under consideration of said stored traffic information data. The present invention therefore offers the advantages that changes of traffic information data can be easily identified and traffic incidents affecting the optimal route are continuously monitored even if the user is using an alternative route.

## Description

### Field of the Invention

The invention generally relates to a navigation system and in particular to an off-board navigation system for providing navigation and route information also including real time traffic information.

### Background of the Invention

Two technical developments had and will have an ever-greater influence on our daily lives. This is on the one hand satellite-based navigation and positioning and on the other hand mobile phones and the Internet. By combining geographical positioning systems such as GPS (Global Positioning System) with wireless communication systems such as GSM, GPRS or UMTS and Internet-based information systems, comprehensive telematic solutions are created that not only offer navigation but also integrate communication information and entertainment applications designed for mobile use.

The interest in positioning techniques based on use of a global navigation satellite system such as a GPS or on the cellular network infrastructure itself - or a combination of the two methods - is growing rapidly and creates an increased demand for commercial applications such as navigation or location based services.

At the moment there are two global navigation satellite systems (GNSS) currently in operation. One at the US Global Positioning System (GPS) and the other is the Russian Global Navigation Satellite System (GLONASS). These systems are constantly being upgraded to meet higher standards of reliability. A third GNSS named Galileo is currently being developed in Europe to specifically provide a higher standard of integrity and reliability.

Generally, a GNSS is a network of satellites which transmits high frequency radio signals containing time data that can be picked up by a receiver, allowing the user to pinpoint the precise location anywhere around the globe.

Applications for delivering information through in-car navigation systems or wireless handheld devices do not necessarily require highly accurate position information, but they do require a link to spatial data, providing location-specified information.

To provide this additional information one possibility is to transmit decoded audio signals via radio stations or wireless telecommunication channels. Various systems are known for vehicle navigation which supply the driver with traffic information. Examples of these systems are RDS-TMC systems which assist drivers in avoiding traffic jams by transmitting a digital message over a radio channel to warn the driver of such an incident.

Generally navigation systems can be divided into two main categories. On-board navigation systems and off-board navigation systems.

In recent years, more and more automobiles are equipped with navigation systems and mainly with on-board navigation systems. These on-board navigation systems encapsulate all functions on one computer which is implemented in the car. A navigational computer includes a display screen, an input means such as a keyboard or a remote control and a storage means such as a CD. Due to their advantages they have become very popular. To be of use such on-board navigation systems must provide detailed maps and therefore have the disadvantage of requiring large amounts of memory. These maps are generally stored on CD-ROM and therefore do not provide actual information concerning the street conditions or other attributes of street segments. The geographical map and routing data is typically stored on the CD-ROM and the map database on the CD-ROM can have various levels of detail. As indicated above, such navigation systems are stand-alone devices. They rely completely on data stored on the local storage device for geographical and other information. Therefore the capacity of the storage device is a limiting factor for how detailed the stored information is. Moreover, the CD-ROM must be updated frequently for a current mapping database. Additionally, the more detailed the mapping database, the more expensive it is.

A navigation system that provides current information to users without the need to update their local databases whenever changes occur is for example, an off-board navigation system.

An off-board navigation system has a client/server architecture. Therefore a first component of such a system is an off-board navigation server located at a remote site which is responsible for optimal route calculation. Its main components are a vector map database and a routing engine. The second component of the off-board navigation system is an on-board navigation client in the car. In general, this on-board navigation client contains a user interface and a route guidance module. Furthermore, the off-board navigation system includes a communication module which is establishing the wireless communication between the server and the client.

The basic scenario for using off-board navigation is that a user specifies his destination using an on-board navigation client and inputs optionally his origin position. The destination may be an address or a point of interest or longitude and latitude coordinates. By using the communication channel the on-board navigation client sends a navigation request to the off-board navigation server. The off-board navigation server calculates an optimal route concerning the shortest distance to the destination or the fastest way to the destination and sends a route description back to the on-board navigation client. Now, using the received route description, the on-board navigation client guides the user in combination with its route guidance module to the selected destination.

US6292743 discloses such a system wherein a client navigation system establishes a wireless connection to a navigation server on a computer network. The client requests a route by uploading stored and stops specifications. The server calculates an optimal route based on the real time data available on the network.

Newer navigation systems either on-board or off-board are using dynamic navigation. This dynamic navigation generally uses vector map databases, wherein for each street segment attributes are contained that can be used for calculating the route for finding the optimal way between two points. Usually, such attributes are average speed of a street, number of lanes of a street, street type, etc. Normally, so-called static navigation systems are using only this pre-defined and fixed information for a route calculation. In real life, however, the realistic average speed for specific roads varies in time. Responsible for this are traffic jams, construction works, traffic accidents and other incidents that affect the real average speed on the streets.

Using reliable sources for information about current traffic conditions of a street network, the average speed attribute of a street segment is dynamically changed according to the data received by the sources for calculating the optimal route. Such a system is called Dynamic Navigation System.

Other systems are known such as US6236933 that describe a system for instantaneously monitoring traffic congestion including a plurality of monitoring electronic devices located in motor vehicles travelling on the roads in a selected region. Using the system, users are also able to obtain estimated times of arrival for a specific trip, and recommendations on predefined alternative route information.

Using a dynamic navigation server for calculating navigation routes the following situations have to be considered. New traffic incidents may significantly change the optimal way between the starting point and the destination point after the path is already calculated. At the time of the route calculation a road segment may be free of traffic incidents. Therefore the average speed is similar to said speed specified in the original vector map database. However, before the user reaches a specific road segment, a traffic jam may significantly reduce the average speed on this specific road segment. Instead of using this specific street segment the optimal way would be using an alternative way.

Furthermore, if the removal of a traffic incident has to be considered, it may happen that a traffic incident exists during the calculation of the optimal route, but disappears after the route calculation. In this case, the user is driving a detour instead of the optimal route. Therefore the optimal way must be updated if a traffic incident at a segment disappears before a user reaches this segment.

### OBJECT OF THE INVENTION

The present invention aims to provide an improved off-board navigation system and method that considers time varying traffic incidents as long as the user of the off-board navigation system has not reached the affected road segments. A further object is to provide an off-board navigation system with an increased effectiveness in order to obtain a better server performance and to save costs.

### SUMMARY OF THE INVENTION

According to the present invention, there is provided an off-board navigation system and method for providing navigation and route information as claimed in claims 1 and 19.

The present invention is based on the insight that changes in traffic information data have to be easily traced back in a database to effectively identify the affected road segments. Furthermore, the present invention is based on the insight that not only the actual route but also the optimal route has to be monitored continuously concerning changes in traffic information data.

In one embodiment is provided an off-board navigation system for providing navigation and route information including real time information comprising at least one client and a server, the at least one client being connected to the server by a wireless connection. The off-board navigation system comprises a static map database for storing road map data and a traffic information database for storing traffic information data, wherein the databases are connected via telecommunication or computer network to the server for providing the client with navigation and road map information, therefore a navigation system is characterized by a dynamic map database for storing time varying attributes of the road map data under consideration of the stored traffic information data.

In another preferred embodiment there is provided an off-board navigation system for providing navigation and route information including real time information comprising at least one client in the front end server the at least one client being connected to the server via a wireless connection.

The off-board navigation system further comprises a static map database for storing road map data, traffic information database for storing traffic information data wherein those databases are connected via a telecommunication or computer network to the front-end server for providing the client with navigation and road map information, inputting means for inputting a storing point in a destination point of a client individual route and a standardized positioning system at the client for determining an actual geographical position.

The system is characterized by a dynamic map database for storing time varying attributes of the road map data under consideration of the stored traffic information data. The off-board navigation system furthermore is characterized by the server at least consisting of a front-end server and a traffic information server connected to a traffic information provider via a telecommunication or computer network for receiving or requesting for traffic information data and further connected to the dynamic map database and the traffic information database.

The traffic information server updates the time varying attributes within a specific time period. Furthermore, the off-board navigation system comprises a routing server connected to the static map database, the dynamic map database and the front-end server for calculating a first and a second client individual route between the starting point and the destination point, wherein the first client individual route being calculated without time varying attributes of the dynamic map database and the second client individual route being calculated with the time varying attributes of the dynamic map database.

The off-board navigation system further comprises a dynamic navigation server connected to the traffic information database, the route database and the front-end server for storing at least client individual identification data, the first and the second client individual route and the starting and destination point of the client individual route in a route database and transmitting traffic information data effecting the client individual routes to the front-end server. The routing server calculates the first client individual route as the fastest possible connection between the starting point and the destination without considering the time varying attributes of the dynamic map database and the second client individual route as the fastest possible connection between the starting point and the destination point considering the time varying attributes of the dynamic map database.

Furthermore, the front-end server comprises storage means for temporarily storing the first and second client individual route and transmits client individual route database on data of the second client individual route and/or traffic information data affecting the first and the second client individual route to the client.

The traffic information server notifies the dynamic navigation server about changes in the traffic information data and changes in the dynamic map database and causes a transmission of traffic information data concerning the second client individual route in the event, that the changes in the dynamic map database affect only road map data of the second client individual route.

In another embodiment there is provided an off-board navigation method for providing navigation and route information including a real time information to at least one client, the at least one client being connected to a server via a wireless connection. The off-board navigation method comprises storing road map data in a static map database and storing traffic information data in a traffic information database wherein the databases are connected via telecommunication or computer network to the server for providing the client with navigation and road map information. The off-board navigation method is characterized by storing time varying attributes of said road map data in a dynamic map database under consideration of the stored traffic information data.

The present invention therefore has the advantages that changes of traffic information data can be easily identified and thus is improving the performance of the databases and the servers. Moreover, the proposed off-board navigation system and method is able to continuously monitor traffic incidents affecting the optimal route even if the user is using an alternative route. Moreover, the proposed system is working in a way that no unnecessary information is sent to the user via the client and therefore on the one hand the costs for running the system and the costs for the user are reduced drastically and on the other hand the performance of such a multi-user system and method is improved as the road segments and the user affected by traffic incidents can be easily identified.

Additionally, the system and method can be configured to automatically calculate new or alternative routes for a driver and, if necessary, transmit them automatically. As a consequence, mobile users do not only arrive faster and safer, they are also provided with up-to-date information while still on the road. Therefore, the present invention offers a cost effective alternative to existing navigation systems.

### BRIEF DESCRIPTION OF THE DRAWINGS

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following, and more particular description of the invention as illustrated in the accompanying drawings, wherein:
- FIG. 1: is a schematic diagram of a preferred embodiment of the present invention;
- FIG. 2: is a further schematic diagram of a preferred embodiment of the present invention showing a route request;
- FIG. 3: is a flowchart showing a route calculation according to a preferred embodiment of the present invention;
- FIG. 4: is another schematic diagram of a preferred embodiment of the present invention showing an update of real time traffic information data;
- FIG. 5: is a flowchart showing modifying traffic information data according to a preferred embodiment of the present invention;
- FIG. 6: is another schematic diagram of a preferred embodiment of the present invention showing an automatic route update and modification; and
- FIG. 7: is a flowchart showing a dynamic route re-calculation according to a preferred embodiment of the present invention.

### DETAILED DESCRIPTION OF THE PRESENT INVENTION

The illustrative embodiments of the present invention will be described with reference to the figure drawings, wherein similar elements and structures are indicated with similar reference numbers.

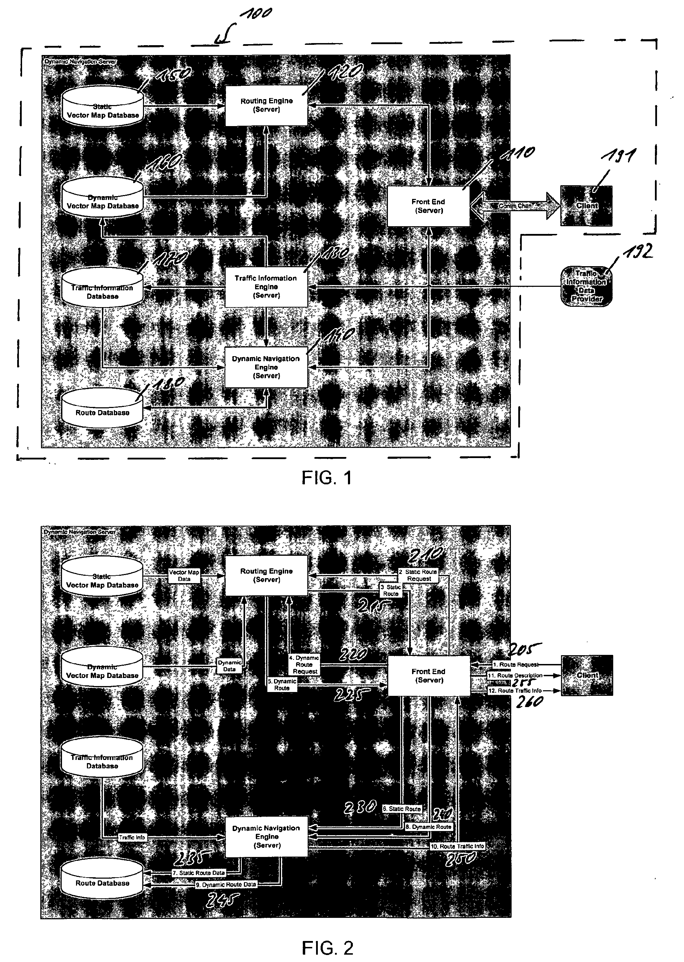

Referring now to the drawings, Fig. 1 shows a schematic diagram of a preferred embodiment of the present invention. The differential dynamic navigation system 100 comprises a front end server 110 which is connected to a routing server 120 and a dynamic navigation server 140. The front end server transfers via a communication channel, preferably via wireless communication network, route data and traffic information data to a client 191. Furthermore, the front end server receives requests and data from the client 191 via the communication channel. Additionally, the front end server is responsible for the coordination of all other modules. Furthermore, the front end server temporarily stores client individual data such as preferences of a user of the client or client identification data.

The routing server 120 is connected to a static vector map database 150 and to a dynamic vector map database 160. The static vector map database is providing the routing server with road vector map data, i.e. road shape coordinates, road types, average speed of a street, number of lanes of a street, etc.

In particular, the static vector map database contains road segments and its attributes that are necessary to calculate the time a vehicle requires to pass through the road segment. Therefore, these attributes must include at least the maximal allowable speed in this road segment, the length of the segment and as a result of statistical measurement an average speed in this road segment. Alternatively, time attributes are used for characterizing the road segments, i.e. a minimum time required to pass through said road segment and an average time to pass through the road segment.

The dynamic vector map database 160 contains additional attributes assigned to each road segment. These time attributes are either real-time or at least time varying. These attributes represent the time necessary for a vehicle to pass through said segment in the current moment.

Furthermore, the differential dynamic navigation system comprises a traffic information server 130 connected to a traffic information database 170 and a route database 180 which is connected to the dynamic navigation server 140. The traffic information server 130 is responsible for search traffic information data from external traffic information data provider 192 or others like radio stations and managing the dynamic vector map database 160 as well as a traffic information database 170. While in the traffic information database preferably the exact description of traffic accidents are stored, for instance the reason for the incident, like accident, road works, etc, and the exact position of the incident, in the dynamic vector database only the time varying attributes of this traffic information data are stored in the reference to the road map data or road segment effected by the traffic information data. Namely, changes in the average speed or average time needed to pass the road segment are stored or changed in the dynamic vector map database in reference to the road segments stored in the static vector map database. This data is updated continuously or periodically by the traffic information server.

The routing server 120 calculates the optimal route between a starting point and a destination point of a route selected by a client. Preferably, "optimal" means calculating a route with the shortest estimated time of arrival. Alternatively or additionally, other criteria are used to optimize the route e.g., the shortest distance or preferred road types. For all these calculations the routing server uses a static vector map database and the dynamic vector map database. If the routing server has calculated the route using only the static vector map database, this route will be called a static route. A static route is the best route between a starting point and a destination point, if there is no traffic incident along the route. If the routing server has calculated a route additionally using the dynamic vector map database, this route will be called a dynamic route. This dynamic route is the optimal route for the moment as it considers all at the moment available traffic information data affecting the road segments along the calculated route.

The dynamic navigation server 140 manages the route database 180 and performs main processes of the differential dynamic navigation system as will be explained further below. In the route database 180 client individual data such as client identification data, the user's specific starting point and destination point, custom route request attributes, etc., are stored together with the client's individual static and dynamic route. Furthermore, the route database provides data structures that optimize the search for routes that are effected by traffic incidents.

Client individual identification data is alternatively an IP address as the front end server and the client are continuously connected to an internet or the client's telephone number in the event that the communication channel between the front end server and the client is established via a mobile telecommunication network. Preferably, the communication module integrated into or attached to the client uses a mobile telecommunication network with a GSM, GPRS or UMTS standard. Preferably, the front end server transmits the data via SMS to the client and the client to the front end server. Alternatively, the front end server forces the client via SMS to establish a connection to the front end server so that the front end server and the client are able to change or update data. For so-called push mechanisms the front end server 110 needs the client individual identification data. Alternatively, additional transmission techniques are used for GPRS and UMTS.

The starting point and the destination point of the desired route are inputted by a user via a keyboard or a touch screen or via voice recognition into the client and transmitted to the front end server. Alternatively, the starting point is the actual geographical position of the user which is determined by a standard positioning system like a GPS system, and transmitted by the GPS system to the client. Alternatively, the starting point and the destination point of the desired route are inputted and transmitted to the front end server via another client connected to the front end server via a telecommunication or computer network like the internet. In this case, the mobile client 191 later on downloads the starting point and the destination point of the desired route together with the client's individual route data.

Furthermore, additional attributes are used for a further optimization of the desired route. Such attributes are as above-mentioned a preferred road type or shorter distance or specific inter-stations.

Furthermore, the traffic information server collects weather dependent data regarding the road condition of the road segments e.g., rain, snow or fog, etc., which influence the average speed on a road segment, for later use and for the route calculation.

At the client a program is installed for turn by turn navigation which is translating the information sent by the front end server to corresponding route guidance advice. The client is operated preferably via a touch screen. Incoming information such as new traffic information when using vehicle navigation is alternatively read out to the driver via voice. A special telematic browser allows to configure individual information, for instance, news, sports, weather forecast, the cheapest gas station on the way, the preferred restaurants or hotels at the destination, etc. The client is based on Microsoft pocket PC technology, alternatively on other standard operation systems like Unix, Linux or QNX. As a client a PDA, a laptop or other computer systems are used. It includes voice recognition for speech voice directions and displays the maneuvers, the remaining travel time and distance to the destination. Additionally, the client, preferably a pocket PC or PDA, comprises an address database which can be used for defining the starting point or the destination point of the route. Further comprises microphone and loud-speaker for the voice recognition and voice output. It further comprises a GPS receiver and a GPS modem or an interface to a GPS receiver or a GPS modem.

Figure 2 is showing a schematic diagram of a client route requests according to the preferred embodiment of the present invention. In a step 205, the client establishes a communication channel between the client and the front end preferably via a wireless telecommunication network. After that, the client initiates a route request, wherein the route request contains data characterizing the starting point and the destination point of a desired route as well as the client's individual identification data or other data necessary to identify the client. The data characterizing the starting and the destination point are alternatively addresses or latitude and longitude of the starting and the destination point. After transmission of this data the front end server is checking the data characterizing the starting and the destination point and if necessary translates address data to coordinate data in step 210. Furthermore, the front end server invokes the routing server 120 to calculate a corresponding static route. Based on the vector map data of the static vector map database the routing server is calculating a static route in step 215 and transmits it to the front end server. The front end server temporarily stores this static route.

In the next step 220 the front end server invokes the routing server to calculate a corresponding dynamic route. This dynamic route is calculated by the routing server using the vector map data from the static vector map database and the dynamic vector data from the dynamic vector map database in step 225. After that, the dynamic route is transferred to the front end server and the front end server temporarily stores the dynamic route.

In step 230 the front end server transmits the temporarily stored static route to the dynamic navigation server together with necessary client individual data such as client individual identification data, starting and destination point, etc.

The dynamic navigation server creates the necessary data structure in the route database and then stores the client individual data together with the client individual route data in the route database (step 235).

In the next step 240 the front end server sends the dynamic route data to the dynamic navigation server and furthermore in step 245 the dynamic navigation server stores the dynamic route data for this client in the route database. After these steps the route database contains a data structure containing client individual data with user's specific information, starting and destination points and a static and a dynamic route for each client.

In step 250 the dynamic navigation server analyses the dynamic route by comparing its road segments with the locations of traffic information data from the traffic information database 170. Preferably, the road segments of the dynamic routes are compared with data concerning road segments effected by traffic information.

In step 255 the front end server sends the dynamic route to the client. This data contains all necessary information for the route guidance.

In step 260 data concerning traffic accidents on the dynamic route are also sent to the client. In that case the client does not need to perform any actions due to traffic information data, because the calculated dynamic route is already optimized for the actual street conditions.

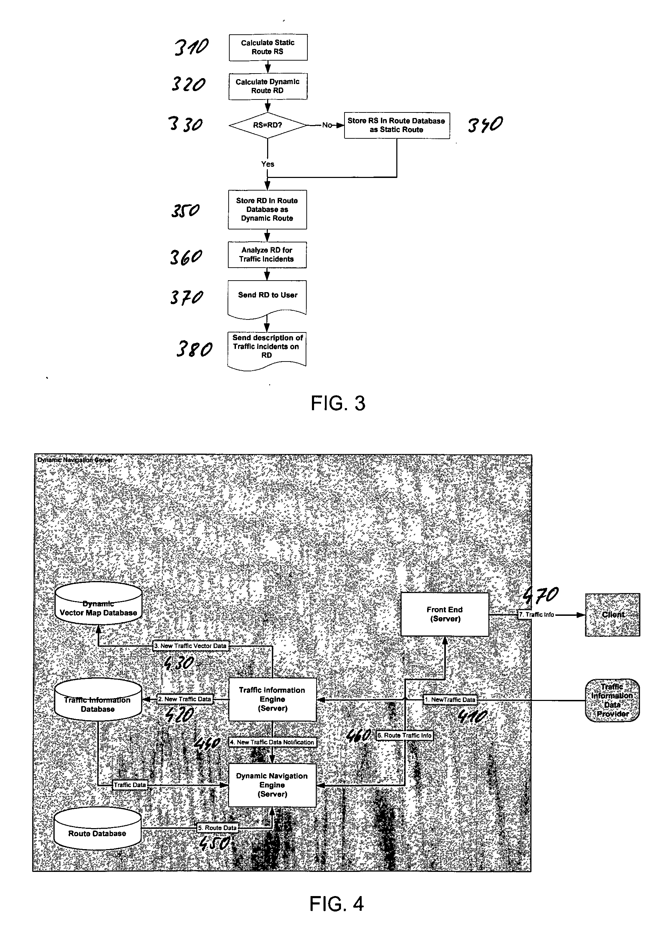

Figure 3 shows a flow-chart for a route calculation according to the preferred embodiment of the present invention. According to the preferred embodiment of the present invention each optimal route between the starting point and the destination point is calculated twice for each client and stored twice in the database once as a static route and once as a dynamic route. In the following the route calculation is explained in detail.

In step 310 the static route Rₛ is calculated by using vector map data from the static vector map database 150. Therefore, the static route is only optimized for a situation not considering any traffic accidents or other time varying attributes of the static vector map database.

In step 320 the route server 120 calculates the dynamic route R_{d} using the vector map data of the static vector map data base combined with the dynamic data of the dynamic vector map database. Therefore, this route is optimized for taking into account all current traffic information or other time varying attributes available for the traffic information server 130.

At step 330 the dynamic route R_{d} and the static route Rₛ are compared. In the event that there are no traffic incidents on the optimal route between the starting and destination point the dynamic route and the static route are equivalent. In that case step 350 will be executed directly. Otherwise if the dynamic route and the static route are different due to traffic incidents the static route will be stored in the route database as a static route in step 340. In step 350 the dynamic route is stored in the route database as the dynamic route.

In both cases the dynamic route will be compared with the contents of the traffic information database in step 360. This is done to inform the user of the client about traffic incidents that are on the optimal for the time being. Preferably, a message is generated that the actual transmitted route is already the optimal route under consideration of the current traffic situation. In step 370 the client individual route data comprising the dynamic route is sent to the client. Furthermore, the description of traffic incidents are sent to the client in step 380.

The dynamic route and the static route or only the dynamic route if both routes are equal, are then stored in the route database, together with the above-mentioned basic information about the user of client that has initiated the route calculation. Furthermore, it is identified in the route database which data is referring to the dynamic route and which data is referring to the static route.

Figure 4 is showing a schematic diagram for modifying or updating traffic information according to the preferred embodiment of the present invention.

In step 410 the traffic information server 130 requests continuously or periodically an external traffic information data provider 192 for new data. Preferably, this is done by data polling every five minutes. Alternatively, an external traffic information data provider initiates the connection to the traffic information server 130 as soon as new data is available. In that case a publishersubscriber model is used.

In the case that new traffic information data is available, the traffic information server modifies the traffic information database by inserting the new data (step 420). Alternatively, the data in the traffic information database is modified or deleted. Each modification in the database is marked and registered for a later analysis so that this additional information about the changes of traffic situations is also used for supplying traffic information data to the client.

Furthermore, this data about changes in the traffic information data is used to reduce the calculation effort for recalculating the client information routes in the case of a traffic accident along the calculated client individual route.

In step 430 the traffic information server is analyzing each traffic incident and each effect of each traffic incident on the road segments and stores the resulting data as new traffic vector data in the dynamic vector map database 160 with a reference to the corresponding road segments. Furthermore, in step 440 the traffic information server extracts out of the traffic information new traffic data notifications and notifies the dynamic navigation server 140 about changes in the traffic information database.

In step 450 dynamic navigation server identifies the routes which are effected by the new, updated or deleted traffic incidents, if an incident is new or updated in that way which makes the needed time to pass a road segment longer. All dynamic routes that contain such segments are analyzed. Users that are using such a route will be informed about the traffic incident. In the case that a traffic incident is deleted or updated in that way that makes the needed time to pass the road segment shorter, both the static and the dynamic route that contain that road segment are analyzed. If the static route is affected, the user will be informed, that it is possible that a better route than the current route exists and that he can try to initiate a route recalculation. If the affected route is the dynamic route the user is only informed about the change in traffic situation, but it is not necessary to ask for a new route calculation.

In step 460 all client individual route data found in step 450 is sent back to the front end server together with the client individual identification data. Each user of a client is informed only about such traffic incidents that affect his route. Finally, in step 470 the front end server sends updated traffic information to each user/client.

Alternatively, the off-board navigation system is configured only to provide traffic information without automatic route recalculation.

As this off-board navigation system is a multi-user system the above described procedure shows that an effective design of the system is necessary to handle multiple request either from the clients or from the traffic information server in the case that the traffic information is changed. Using two different routes for each client, the static and the dynamic route, the clients can be easily informed whether they are on the optimal route or not avoiding a check or a recalculation of each client individual route data.

There are three different types of traffic notifications as mentioned above. One is a notification about the new traffic incidents, another is a notification about removing a traffic incident and a third is notification about a modification of a traffic incident.

At the moment a new traffic incident occurs, all dynamic routes in the route database will be checked for road segments being affected by the new traffic incident. If the affected stored route is a dynamic route, the concerned client will be informed about this new traffic incident. As a consequence, the user of the system may initiate a route recalculation using the stored destination point and the actual position determined by the GPS-system.

In the case that a traffic incident is no longer present, all static routes in the route database 180 are checked for road segments affected by the traffic incident. When the static route is no longer affected by the traffic incident, the user of this route is informed that this current route is no longer the optimal route. As a response, the user can initiate a route recalculation via the client. In addition, all dynamic routes are checked to identify all routes containing road segments that became free of this traffic incident. Correspondingly, all users having these road segments in their routes are notified about this change of the traffic situation.

The above-made explanations make clear how effectively routes affected by new traffic incidents are identified and, how precisely it is determined which routes have to be recalculated in accordance with the present invention.

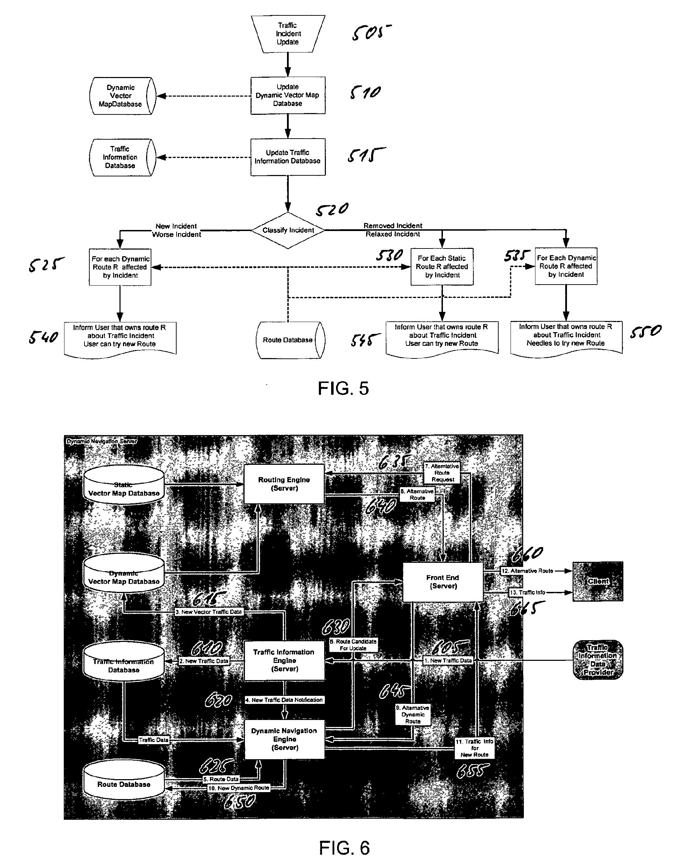

Figure 6 shows a schematic diagram for an automatic route update according to the preferred embodiment of the present invention. In step 605, the traffic information server 130 requests as mentioned above for new traffic information data or an external traffic information data provider is sending new traffic information data to the traffic information server. In step 610, the traffic information server modifies the traffic information database by inserting new traffic information data, modifying or deleting existing traffic information data. Each change in the traffic information database is marked for later analysis.

In step 615, the effects of each traffic incident contained in the traffic information data are calculated and the thus received new or updated data is stored in the dynamic vector map database. In step 620, the dynamic navigation server is notified about the changes in the traffic information database by the traffic information server.

In step 625, the routes containing the road segments effected by the changes in the traffic information data are identified together with the concerned clients.

As a result, the front end server is informed by the dynamic navigation server in step 630 about the routes which have to be updated. Since in the route database, the client individual starting and destination points are stored, the dynamic route server will push the front end server to start a route request to calculate new dynamic routes for the identified routes. In step 635, the front end server will dispatch this alternative route request to the routing server. As a consequence, the routing server calculates alternative dynamic routes for the identified clients and transmits it to the front end server (step 640). The recalculation of the dynamic routes is executed with the new vector traffic data contained in the dynamic vector map database.

In step 645, the alternative dynamic routes are temporarily stored at the front end server and transmitted to the dynamic route server. The dynamic route server compares the new routes with the existing dynamic routes. If the new routes are not better than the old ones, and if the routes have been recalculated because a traffic incident has affected the former dynamic routes, the users will be informed only about the new traffic situation as a consequence.

In step 650, if the route recalculation does not provide a better result than the former dynamic route, and the traffic incident effects road segment on the static route, there is no necessity to change the current route and the concerned user-client needs not to be informed. On the other side, if there is an improvement regarding the old dynamic route, it is necessary to replace the old dynamic route in the route database. In step 655, all new stored dynamic routes will be identified and all necessary information is sent to the front end server. The front end server transmits all necessary client individual route data to the concerned clients in step 660. In step 665, additionally all necessary traffic information is sent to the affected clients. As mentioned above, the new routes and the new traffic information is exclusively transmitted to those clients affected by the changes in the traffic situation.

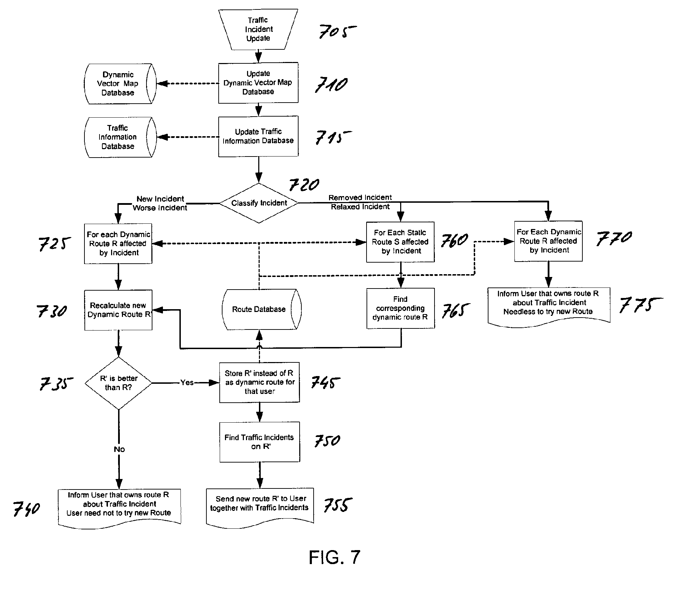

Figure 7 shows in detail a flowchart for a dynamic route recalculation according to the preferred embodiment of the present invention. Optionally, the off-board navigation system can be configured not only to notify users about traffic incidents, but also to automatically check new optional routes. The automatic route recalculation is executed if there is new traffic information data on traffic incidents concerning dynamic routes or traffic information data about removing or changing traffic incidents also being relevant for the static routes. By distinguishing between new traffic incidents and deteriorated traffic incidents, concerning dynamic routes or removing traffic incidents and improving traffic incidents concerning static routes, it is effectively estimated which routes have to be recalculated and which ones do not have to be recalculated.

As shown in figure 7, in steps 705 to 715, the traffic information server requests for new traffic information data as mentioned above and updates the dynamic vector map database and the traffic information database. In step 720, the traffic information data is analyzed and classified in which way they affect the static route and the dynamic route as mentioned above. In the case that a traffic information data has a new incident or deteriorated incident as a consequence in step 725 all dynamic routes affected by this traffic incidence are identified and in step 730 new dynamic routes R' are calculated. If a new calculated dynamic route R' is shorter or faster, so-called better, than the former dynamic route R the new dynamic route R' is stored in the route database instead of the former dynamic route R (step 745). Consequently, the traffic information for this new dynamic route R' is collected in step 750 and sent to the affected client together with all traffic information data about the traffic incident along the new route R'. If, in step 735, the result is that the new recalculated dynamic route R' shows no advantages over the old dynamic route R, the user of the client is informed in step 740 of the corresponding traffic incident and the situation that there is no need to recalculate a route. Alternatively, the user is not informed at all.

If step 720 has classified the traffic information data as removed traffic incident or relaxed traffic incident, in step 760, each static route S affected by that traffic incident will be identified. In step 765 all corresponding dynamic routes R are identified and, in step 730 the corresponding new dynamic routes R' are recalculated. After that, the corresponding steps 735 to 755 or 740 are executed as mentioned above. In the case of removed or relaxed traffic incidence, additionally, in step 770, each dynamic route R affected by the traffic incident is identified. In that case, in step 775, the user of the client using these routes R has to be informed about that traffic incident and that it is needless to try to request for a new route.

Instead of recalculation of the complete route alternatively the client transmits its actual position together with a manual request in order to receive only a recalculation of the route between its actual position and the destination point or traffic information data concerning the route between its actual position and the destination point.

It is contemplated that the above mentioned embodiments of the present invention also work with other databases other than vector databases. Moreover, the above mentioned embodiments of the present invention are not restricted only to GPS, GLONASS or Galileo for determining an actual geographical position, but also work on the basis of cellular network infrastructures - or a combination of the two methods.

Furthermore, the above mentioned embodiments of the present invention are not limited to the sole use of an off-board navigation server, but also can use an on-board navigation system or on-board navigation database in combination with the above described off-board navigation server. For this the client 191 provides an interface to an on-board navigation system or database and a module for combining the information from the on-board navigation system or database with the information of the off-board navigation system. This may further reduce on the one hand the transmission costs for transmitting the necessary navigation and route information and on the other hand the costs for updating the on-board navigation database with a minimum of additional effort.

## Claims

1. An off-board navigation system (100) for providing navigation and route information including real-time information comprising at least one client (191) and a server (110), said at least one client being connected to said server via a wireless connection, comprising:
a static map database (150) for storing road map data; and
a traffic information database (170) for storing traffic information data, wherein said databases are connected via a telecommunication or computer network to said server for providing said client with navigation and road map information,
**characterized by** a dynamic map database (160) for storing time varying attributes of said road map data under consideration of said stored traffic information data

2. The off-board navigation system according to claim 1, **characterized by** further comprising:
inputting means for inputting a starting point and a destination point of a client individual route;
a standardized positioning system at said client for determining an actual geographical position; and
means for determining client individual route data based on said data stored in said static and/or dynamic map database.

3. The off-board navigation system according to any of claims 1 or 2, **characterized by** said static map database and said dynamic map database being vector map databases.

4. The off-board navigation system according to at least claim 2, **characterized by** said means for determining client individual route data calculates a first and a second client individual route between said starting point and said destination point, said first client individual route being calculated without said time varying attributes of said dynamic map database and said second client individual route being calculated with said time varying attributes of said dynamic map database.

5. The off-board navigation system according to claim 4, **characterized by** said means for determining client individual route data stores said first and second client individual route and client individual identification data in a route database (180).

6. The off-board navigation system according to any of claims 4 and 5, **characterized by** said server updates said time varying attributes within a specific time period, identifies all first and second client individual routes affected by said time varying attributes of said road map data under consideration of said stored traffic information and informs a concerned client using said stored client individual identification data.

7. The off-board navigation system according to any of claims 4 through 6, **characterized by** said server consisting of at least a front end server (110) and a traffic information server (130), said traffic information server being connected to a traffic information provider via a telecommunication or computer network for receiving or requesting traffic information data and further being connected to said dynamic map database and said traffic information database.

8. The off-board navigation system according to any of claims 4 through 7, **characterized by** said means for determining client individual route data comprising:
a routing server (120) connected to said static map database, said dynamic map database and said front end server for calculating said first and said second client individual route between said starting point and said destination point and
a dynamic navigation server (140) connected to said traffic information database, said traffic information server, said route database and said front end server for storing at least said client individual identification data, said first and second client individual route and said starting and destination point of said client individual route in said route database and transmitting traffic information data affecting said client individual routes to said front end server.

9. The off-board navigation system according to claim 8, **characterized by** said routing server calculates said first client individual route as a fastest possible connection between said starting point and said destination point without considering said time varying attributes of said dynamic map database and said second client individual route as a fastest possible connection between said starting point and said destination point considering said time varying attributes of said dynamic map database.

10. The off-board navigation system according to any of claims 4 through 9, **characterized by** said front end server comprises storage means for temporarily storing said first and said second client individual route and transmits client individual route data based on data of said second client individual route and/or traffic information data affecting said first and second client individual route to said client.

11. The off-board navigation system according to any of claims 4 through 10, **characterized by** said front end server transmits only traffic information data to said client that affects said client individual route.

12. The off-board navigation system according to any of claims 7 through 11, **characterized by** said traffic information server notifies said dynamic navigation server about changes in said traffic information data and changes in said dynamic map database and causes a recalculation of said second client individual route in an event, that said changes in said dynamic map affect road map data of said first client individual route.

13. The off-board navigation system according to any of claims 7 through 12, **characterized by** said traffic information server notifies said dynamic navigation server about changes in said traffic information data and changes in said dynamic map database and causes a transmission of traffic information data concerning said second client individual route in an event, that said changes in said dynamic map database affect only road map data of said second client individual route.

14. The off-board navigation system according to any of claims 12 or 13, **characterized by** said front end server automatically transmits said recalculated second client individual route or said traffic information data to said concerned client using said client individual identification data.

15. The off-board navigation system according to any of claims 7 through 14, **characterized by** said client manually requests for a recalculation of said second client individual route or traffic information data concerning said second client individual route.

16. The off-board navigation system according to claim 15, **characterized by** said client transmits its actual position together with said manual request for receiving only a recalculation of said second client individual route between said actual position and said destination point or traffic information data concerning said second client individual route between said actual position and said destination point.

17. The off-board navigation system according to any of claims 1 through 16, **characterized by** said client having a interface for a on-board navigation system or on-board navigation database and wherein the client combines navigation information, route information and traffic information data of the off-board navigation system with navigation and route information of the on-board navigation system or on-board navigation database.

18. The off-board navigation system according to any of claims 1 through 16, **characterized by** said client is informed by said front end server via GSM, GPRS or UMTS.

19. An off-board navigation method for providing navigation and route information including real-time information to at least one client, said at least one client being connected to a server via a wireless connection, comprising:
storing road map data in a static map database; and
storing traffic information data in a traffic information database, wherein said databases are connected via a telecommunication or computer network to said server for providing said client with navigation and road map information,
**characterized by** storing time varying attributes of said road map data in a dynamic map database under consideration of said stored traffic information data.

20. The off-board navigation method according to claim 19, **characterized by** further comprising:
inputting a starting point and a destination point of a client individual route;
determining an actual geographical position of said client; and
determining client individual route data based on said data stored in said static and/or dynamic map database.

21. The off-board navigation method according to at least claim 20, **characterized by** that determining client individual route data further includes calculating a first and a second client individual route between said starting point and said destination point, said first client individual route being calculated without said time varying attributes of said dynamic map database and said second client individual route being calculated with said time varying attributes of said dynamic map database.

22. The off-board navigation method according to claim 21, **characterized by** that determining client individual route data further includes storing said first and second client individual route and client individual identification data in a route database.

23. The off-board navigation method according to claim 22, **characterized by** updating said time varying attributes within a specific time period, identifying all first and second client individual routes affected by said time varying attributes of said road map data under consideration of said stored traffic information and informing a concerned client using said stored client individual identification data.
